# EUROPÄISCHE PATENTSCHRIFT

(11) **EP 4 686 919 B1**
(45) Veröffentlichungstag und Bekanntmachung des Hinweises auf die Patenterteilung: **13.05.2026**
(21) Anmeldenummer: 24192498.4
(22) Anmeldetag: 02.08.2024
(51) Int. Cl.: G01F 1/66

(54) **DURCHFLUSSMESSSYSTEM**
FLOW MEASUREMENT SYSTEM
SYSTÈME DE MESURE DE DÉBIT

(43) Veröffentlichungstag der Anmeldung: 04.02.2026
(73) Patentinhaber: Endress+Hauser SICK GmbH+Co. KG, 01458 Ottendorf-Okrilla (DE)
(72) Erfinder: Schröter, Gerry, 01239 Dresden (DE); Panicke, Marcel, 01896 Ohorn (DE); Kallisch, Gerald, 01129 Dresden (DE)
(74) Vertreter: Manitz Finsterwald Patent- und Rechtsanwaltspartnerschaft mbB

(56) Entgegenhaltungen:
- EP-A1- 2 333 495
- CN-A- 102 639 969
- CN-A- 106 768 133
- CN-U- 204 154 343
- CN-U- 212 082 485
- CN-U- 213 397 206
- CN-Y- 2 658 719
- US-A- 5 396 814

## Beschreibung

Die Erfindung betrifft ein Durchflussmesssystem zur Messung eines Fluiddurchflusses in einer Fluidleitung, insbesondere in einer Hochdruckleitung, umfassend: ein Gehäuse, das einen Fluidkanal aufweist und durch den Verlauf des Fluidkanals eine Kanalachse definiert, und wenigstens eine Ultraschallsonde, die am Gehäuse befestigbar ist und die eine Abstrahlungsrichtung aufweist, wobei zur Befestigung der Ultraschallsonde am Gehäuse ein Befestigungsstutzen vorgesehen ist, der an der Außenwand des Gehäuses angeschweißt ist und der eine Aufnahme für die Ultraschallsonde aufweist, wobei die Abstrahlungsrichtung der Ultraschallsonde schräg zur Kanalachse verläuft, wenn die Ultraschallsonde in der Aufnahme angeordnet ist.

In vielen Bereichen der Technik sind Messungen an strömenden Fluiden, d. h. Gasen oder Flüssigkeiten, durchzuführen. Beispielsweise können Strömungsgeschwindigkeiten von strömenden Fluiden in Rohrleitungen mittels Ultraschallmesstechnik nach dem Differenzlaufzeitverfahren ermittelt werden. Auf der Grundlage der ermittelten Strömungsgeschwindigkeit und der bekannten Querschnittsfläche der Rohrleitung kann der Volumenstrom des durch die Rohrleitung strömenden Fluids ermittelt werden. Derartige Volumenstrom-Messvorrichtungen werden häufig in Form von Zählern eingesetzt, um Liefer- und/oder Verbrauchsmengen von Gasen oder Flüssigkeiten zu ermitteln.

Aufgrund des schrägen Verlaufs der Abstrahlungsrichtung in Bezug auf die Kanalachse ergibt sich eine Messstrecke mit einer Komponente in oder gegen die Strömungsrichtung, was für die Ermittlung der axialen Strömungsgeschwindigkeit wichtig ist. Problematisch ist die Schrägstellung der Ultraschallsonde jedoch hinsichtlich der Befestigung am Gehäuse, vor allem wenn diese hochdrucktauglich sein soll.

Beispielsweise kann ein zylindrischer Befestigungsstutzen schräg zur Kanalachse am Gehäuse angeschweißt werden und die Ultraschallsonde mit dem Befestigungsstutzen fluchtend angeordnet sein, also zum Beispiel in Längsausrichtung im Befestigungsstutzen sitzen. Eine solche Anordnung ist beispielsweise in der CN 212082488 U1 offenbart. Wegen der Schrägstellung des Befestigungsstutzens ist dies jedoch mit der Gefahr einer ungleichmäßigen Schweißnaht und einem unerwünschten Verzug verbunden, was in vielen Fällen aufwändige Nachbearbeitungen notwendig macht.

Schräg zur Kanalachse ausgerichtete Stutzen lassen sich auch durch Umformen oder durch Gießen erstellen. Dies ist jedoch ebenfalls mit einem hohen Fertigungsaufwand verbunden. Im Hochdruckbereich ist die Wanddicke des Gehäuses außerdem üblicherweise so groß, dass Umformtechniken ohnehin ausscheiden.

Um eine schräge Ausrichtung des Befestigungsstutzens zur Kanalachse zu vermeiden, könnte auch eine gekröpfte Ultraschallsonde verwendet werden, also eine Ultraschallsonde, die einen Knick aufweist, so dass die Abstrahlungsrichtung schräg zur Sonden-Achse verläuft. Solche Sonden sind jedoch relativ kostspielig. Außerdem ist die Positionierung in der gewünschten Genauigkeit schwierig.

Die CN 2 658 719 Y offenbart ein Durchflussmesssystem mit einer Ultraschallsonde und einem zwischen die Sonde und das Kanalgehäuse eingesetzten Ventil. Ein mit dem Ventil verbundenes Leitungsstück ist mittels eines Montagebauteils am Kanalgehäuse befestigt.

In der US 5 396 814 A ist ein Durchflussmessgerät offenbart, das zwei Ultraschall-Einheiten umfasst, welche mittels jeweiliger Halterungen am zugehörigen Rohr befestigt sind. Die Halterungen sind am Rohr angeschweißt.

Die CN 212 082 485 U offenbart ein Durchflussmesssystem mit zwei Ultraschallsonden, die in jeweiligen Aufnahmen eines Befestigungsbauteils angeordnet sind.

Es ist eine Aufgabe der Erfindung, ein Durchflussmesssystem der vorstehend genannten Art anzugeben, das mit einfachen Mitteln und vorzugsweise ohne mechanische Nachbearbeitung eine exakte und stabile Positionierung der Ultraschallsonde gewährleistet.

Die Lösung der Aufgabe erfolgt durch ein Durchflussmesssystem mit den Merkmalen des Anspruchs 1.

Erfindungsgemäß weist der Befestigungsstutzen eine Mantelfläche auf, die um eine rechtwinklig zur Kanalachse verlaufende Stutzenachse umläuft und sich ausgehend von einem gehäuseseitigen Endbereich des Befestigungsstutzens in Richtung der Stutzenachse erstreckt, wobei im Übergangsbereich zwischen der Mantelfläche des Befestigungsstutzens und der Außenwand des Gehäuses eine umlaufende Schweißnaht gebildet ist.

Somit kann zumindest der dem Gehäuse zugewandte Teil des Befestigungsstutzens rechtwinklig zur Kanalachse ausgerichtet sein, was den Schweißvorgang erleichtert und insbesondere im Gegensatz zu einem schräg an das Gehäuse angeschweißten Befestigungsstutzen eine vergleichsweise gleichmäßige Schweißgeometrie, insbesondere einen gleichmäßigen Schweißspalt und eine einheitliche Schweißnaht, ermöglicht. Der Verzug des Befestigungsstutzens beim Abkühlen ist minimiert. Es hat sich herausgestellt, dass bei einem erfindungsgemäßen Durchflussmesssystem selbst dann eine besonders genaue Positionierung der Ultraschallsonde sichergestellt ist, wenn der Befestigungsstutzen automatisiert und ohne Nachbearbeitung am Gehäuse angeschweißt wird.

Falls das Gehäuse einen runden Querschnitt aufweist, ist der Übergangsbereich zwischen der Mantelfläche des Befestigungsstutzens und der Außenwand des Gehäuses gewölbt, so dass der Verlauf der umlaufenden Schweißnaht im Prinzip eine bezüglich der Stutzenachse axiale Variation aufweist. Diese axiale Variation ist umso geringer, je größer der Durchmesser des Gehäuses und je kleiner der Durchmesser der Mantelfläche des Befestigungsstutzens ist. Bei vielen Anwendungen ist die Fluidleitung im Vergleich zum Befestigungsstutzen so groß, dass die Wölbung des Übergangsbereichs praktisch zu vernachlässigen ist und die Schweißung nahezu nicht beeinträchtigt. Um einen Schweißnahtverlauf ohne jegliche axiale Variation zu erzielen, kann gegebenenfalls außerdem die gekrümmte Gehäusewand im Schweißbereich mit einem ebenen Flächenabschnitt versehen sein. Dadurch ist eine weitere Verbesserung des Schweißvorgangs möglich und der Befestigungsstutzen weist eine einfach zu fertigende Geometrie auf. Der ebene Flächenabschnitt kann im Bereich des Befestigungsstutzens als Ausschnitt in das Material des Gehäuses eingebracht werden oder alternativ im Bereich des Befestigungsstutzens als Sockel auf das Material des Gehäuses aufgebracht werden.

Das Gehäuse des Durchflussmesssystems kann als in die Fluidleitung einzusetzendes Bauteil ausgeführt sein oder selbst einen Abschnitt der Fluidleitung bilden.

Eine Ausführungsform der Erfindung sieht vor, dass die Mantelfläche eine zylindrische Form aufweist und eine Zylinderachse definiert, die parallel zur Stutzenachse verläuft und vorzugsweise mit dieser zusammenfällt. Ein solcher, wenigstens teilweise zylindrisch geformter Befestigungsstutzen ist besonders leicht zu fertigen.

Der Befestigungsstutzen kann wenigstens eine sich schräg zur Stutzenachse erstreckende, insbesondere ebene, Anlagefläche für die Ultraschallsonde aufweisen, um so für eine schräge Ausrichtung der Ultraschallsonde trotz rechtwinkliger Ausrichtung des Befestigungsstutzens zu sorgen.

Bevorzugt weist der Befestigungsstutzen eine ebene Spannwerkzeug-Angriffsfläche auf, die sich rechtwinklig zu der Stutzenachse erstreckt. Der Befestigungsstutzen kann somit während des Schweißvorgangs mit einfachen Mitteln wie zum Beispiel Schraubzwingen in rechtwinkliger Ausrichtung gegen das Gehäuse gespannt werden. Besonders vorteilhaft ist eine ebene Spannwerkzeug-Angriffsfläche im Fall von zwei gegenüberliegend angeordneten Befestigungsstutzen, da dann die parallelen Angriffsflächen aufeinander zu gespannt werden können.

Die Ultraschallsonde kann eine mit der Abstrahlungsrichtung zusammenfallende Längsachse und eine sich rechtwinklig zu der Längsachse erstreckende

Signaltransmissionsfläche aufweisen. Im Gegensatz zu einer gekröpften Ultraschallsonde ist eine geradlinig abstrahlende Ultraschallsonde kostengünstig erhältlich und leicht zu positionieren.

Erfindungsgemäß steht von der Außenwand des Gehäuses wenigstens ein Abstandshalter ab, der an einer Begrenzungsfläche des Befestigungsstutzens anliegt. Ein solcher Abstandshalter sorgt dafür, dass für den Schweißvorgang ein definierter Schweißspalt vorliegt. Außerdem ermöglicht ein Abstandshalter besonders hohe Spannkräfte. Der wenigstens eine Abstandshalter kann bolzenförmig sein und in eine Bolzenaufnahme des Gehäuses eingesetzt sein. Vorzugsweise stehen von der Außenwand des Gehäuses wenigstens zwei Abstandshalter ab, die an einer Begrenzungsfläche oder an jeweiligen Begrenzungsflächen des Befestigungsstutzens anliegen. Insbesondere können genau zwei Abstandshalter vorgesehen sein, die vorzugsweise bezüglich eines Durchtrittslochs für Ultraschallsignale der Ultraschallsonde gegenüberliegend angeordnet sind.

Von der Außenwand des Gehäuses kann ferner wenigstens ein Positionierstift abstehen, der in einer Stiftaufnahme des Befestigungsstutzens aufgenommen ist. Dies sorgt für eine einfache und exakte Positionierung des Befestigungsstutzens relativ zum Gehäuse. Vorzugsweise stehen von der Außenwand des Gehäuses wenigstens zwei Positionierstifte ab, die in jeweiligen Stiftaufnahmen des Befestigungsstutzens aufgenommen sind. Insbesondere können genau zwei Positionierstifte vorgesehen sein, die vorzugsweise bezüglich eines Durchtrittslochs für Ultraschallsignale der Ultraschallsonde gegenüberliegend angeordnet sind.

Bevorzugt ist in dem Gehäuse wenigstens ein mit der Aufnahme fluchtendes Durchtrittsloch für Ultraschallsignale der Ultraschallsonde ausgebildet. Abstandshalter und Positionierstifte wie vorstehend beschrieben können um das Durchtrittsloch verteilt angeordnet sein.

Das Durchflussmesssystem kann wenigstens eine weitere am Gehäuse befestigbare Ultraschallsonde aufweisen, wobei zwischen den beiden am Gehäuse befestigten Ultraschallsonden ein schräg zur Kanalachse verlaufender Messpfad ausgebildet ist. Je nach Anwendung können auch zwei oder mehr Paare von Ultraschallsonden zur Bildung einer entsprechenden Anzahl von Messpfaden vorgesehen sein. Es ist im Prinzip auch möglich, dass durch zwei Ultraschallsonden und einen Reflektor ein Reflexions-Messpfad aufgespannt ist.

Es kann sein, dass das Gehäuse zumindest abschnittsweise rohrförmig ist und vorzugsweise an beiden Enden mit Schraubflanschen versehen ist. Die Rohrachse des rohrförmigen Abschnitts kann hierbei mit der Kanalachse zusammenfallen. Ein solches Gehäuse kann ohne Schwierigkeiten hochdrucktauglich ausgeführt werden und dementsprechend in eine Hochdruckleitung eingesetzt werden.

Die Erfindung betrifft auch ein Verfahren zur Befestigung einer Ultraschallsonde, die eine Abstrahlungsrichtung aufweist, an einem Gehäuse, das einen Fluidkanal aufweist und durch den Verlauf des Fluidkanals eine Kanalachse definiert.

Ein erfindungsgemäßes Verfahren umfasst die Schritte:
Bereitstellen eines Befestigungsstutzens, der eine Aufnahme für die Ultraschallsonde und eine Mantelfläche aufweist, die um eine Stutzenachse umläuft und sich ausgehend von einem Endbereich des Befestigungsstutzens in Richtung der Stutzenachse erstreckt,
Positionieren des Befestigungsstutzens relativ zum Gehäuse derart, dass zwischen dem Endbereich und der Außenwand des Gehäuses ein Luftspalt besteht und die Stutzenachse rechtwinklig zur Kanalachse verläuft,
Anschweißen des Befestigungsstutzens an der Außenwand des Gehäuses unter Bildung einer umlaufenden Schweißnaht im Bereich des Luftspalts, und
Einsetzen der Ultraschallsonde in die Aufnahme des Befestigungsstutzens derart, dass die Abstrahlungsrichtung der Ultraschallsonde schräg zur Stutzenachse verläuft.

Der Befestigungsstutzen wird also nicht schräg, sondern im rechten Winkel am Gehäuse festgeschweißt. Die schräge Ausrichtung der Ultraschallsignale relativ zur Kanalachse kommt nicht durch eine schräge Ausrichtung des Befestigungsstutzens, sondern durch eine schräge Ausrichtung der Ultraschallsonde relativ zum Befestigungsstutzen zustande. Da die an den Luftspalt angrenzende Mantelfläche eine einheitliche Ausrichtung zur Wand des Gehäuses aufweist, besteht eine gleichmäßige Schweißnahtgeometrie, wodurch der beim Abkühlen auftretende Verzug minimiert ist. Die Positionierung des Befestigungsstutzens und somit der Ultraschallsonde ist so genau, dass gegebenenfalls auf eine kostspielige mechanische Nachbearbeitung nach dem Schweißen verzichtet werden kann.

Erfindungsgemäß wird der Befestigungsstutzen beim Positionieren an das Gehäuse herangeführt, bis wenigstens ein an der Außenwand des Gehäuses angeordneter Abstandshalter an einer Stirnfläche des Befestigungsstutzens anstößt. Dies gewährleistet einen definierten Schweißspalt und ermöglicht ein zuverlässiges Durchschweißen. Insbesondere bei Vorhandensein mehrerer Befestigungsstutzen ist es günstig, das Gehäuse vor dem Heranführen der Befestigungsstutzen mit entsprechenden Abstandshaltern vorzusehen. Grundsätzlich ist es aber auch möglich, den Befestigungsstutzen beim Positionieren an das Gehäuse heranzuführen, bis wenigstens ein an einer Stirnfläche des Befestigungsstutzens angeordneter Abstandshalter an der Außenwand des Gehäuses anstößt.

Es kann sein, dass der Abstandshalter bolzenförmig ist und in eine Bolzenaufnahme des Gehäuses eingesetzt wird. Die Bolzenaufnahme kann als durchgehende Bohrung in der Außenwand des Gehäuses gebildet sein.

Der Befestigungsstutzen kann beim Positionieren so an das Gehäuse herangeführt werden, dass wenigstens ein an der Außenwand des Gehäuses angeordneter Positionierstift in eine Stiftaufnahme des Befestigungsstutzens gelangt. Dadurch ist eine exakte Positionierung des Befestigungsstutzens sichergestellt. Insbesondere bei Vorhandensein mehrerer Befestigungsstutzen ist es günstig, das Gehäuse vor dem Heranführen der Befestigungsstutzen mit Positionierstiften vorzusehen. Grundsätzlich ist es aber auch möglich, den Befestigungsstutzen beim Positionieren an das Gehäuse heranzuführen, bis wenigstens ein am Befestigungsstutzen angeordneter Positionierstift in eine Stiftaufnahme des Gehäuses gelangt.

Der Positionierstift kann in eine Stiftaufnahme des Gehäuses eingesetzt werden. Die Stiftaufnahme kann als durchgehende Bohrung in der Außenwand des Gehäuses gebildet sein.

Eine Ausführungsform der Erfindung sieht vor, dass der Befestigungsstutzen während des Anschweißens mittels eines Spannwerkzeugs gegen das Gehäuse gespannt wird, insbesondere wobei das Spannwerkzeug mit einer Spannwerkzeug-Angriffsfläche des Befestigungsstutzens in Kontakt gebracht wird, die sich vorzugsweise rechtwinklig zu der Stutzenachse erstreckt. Dadurch kann insbesondere der Schweißverzug minimiert werden.

Eine Ausführungsform der Erfindung sieht vor, dass vor dem Positionieren des Befestigungsstutzens wenigstens ein Durchtrittsloch für Ultraschallsignale in dem Gehäuse gebildet wird und der Befestigungsstutzen so positioniert wird, dass das Durchtrittsloch mit der Aufnahme für die Ultraschallsonde fluchtet. Die Ultraschallsonde kann je nach Anwendung in das Durchtrittsloch hineinragen oder sogar durch dieses hindurchragen.

Bei einem Gehäuse mit einer gekrümmten Außenwand kann die Außenwand vor dem Positionieren des Befestigungsstutzens mit wenigstens einem ebenen Flächenabschnitt versehen werden, beispielsweise durch Einbringen eines Ausschnitts in das Material des Gehäuses oder durch Aufbringen eines Sockels auf das Material des Gehäuses. Wie oben bereits beschrieben, ist jedoch die Fluidleitung oftmals im Vergleich zum Befestigungsstutzen ohnehin so groß, dass eine Wölbung des Übergangsbereichs zwischen der Mantelfläche des Befestigungsstutzens und der Außenwand des Gehäuses praktisch zu vernachlässigen ist und die Schweißung auch ohne eine solche Zusatzmaßnahme nahezu nicht beeinträchtigt.

Weiterbildungen der Erfindung sind auch den abhängigen Ansprüchen, der Beschreibung sowie den beigefügten Zeichnungen zu entnehmen.

Die Erfindung wird nachfolgend beispielhaft unter Bezugnahme auf die Zeichnungen beschrieben.
- Fig. 1: zeigt ein erfindungsgemäßes Durchflussmesssystem in einer seitlichen Schnittansicht.
- Fig. 2: ist eine vergrößerte Teildarstellung des in Fig. 1 gezeigten Durchflussmesssystems.
- Fig. 3: zeigt ein Gehäuse des in Fig. 1 gezeigten Durchflussmesssystems vor dem Einsetzen von Positionierstiften und Abstandshaltern.
- Fig. 4: zeigt das Gehäuse gemäß Fig. 3 mit eingesetzten Positionierstiften und Abstandshaltern.
- Fig. 5: zeigt einen an das Gehäuse gemäß Fig. 4. herangeführten Befestigungsstutzen.
- Fig. 6: zeigt das Gehäuse gemäß Fig. 4. mit mehreren angeschweißten Befestigungsstutzen.

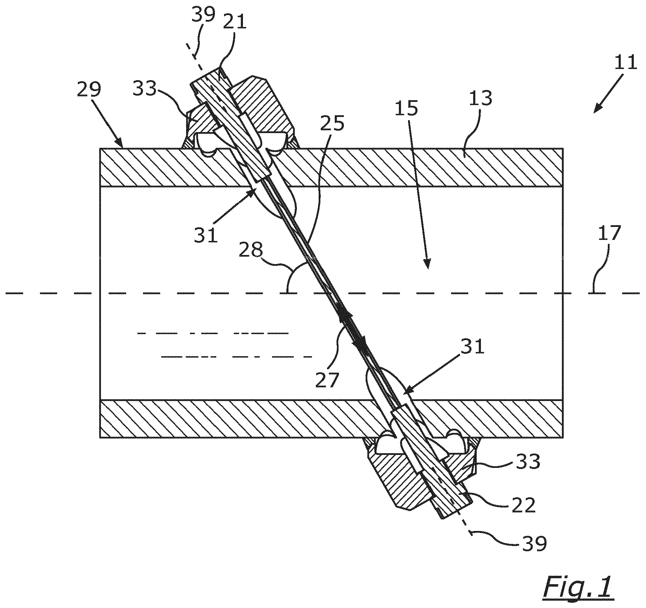

Das in Fig. 1 gezeigte, gemäß einer Ausführungsform der Erfindung gestaltete Durchflussmesssystem 11 umfasst ein aus Metall gefertigtes, vorzugsweise einstückiges Gehäuse 13, das einen Fluidkanal 15 aufweist. Wie gezeigt ist der Fluidkanal 15 geradlinig und definiert eine Kanalachse 17. Bei dem dargestellten Ausführungsbeispiel ist das Gehäuse 13 rohrförmig, wobei der Fluidkanal 15 einen kreisrunden Querschnitt aufweist. Für den Einbau in ein nicht dargestelltes Fluidleitungssystem kann das Gehäuse 13 mit stirnseitigen Schraubflanschen versehen sein, was in Fig. 1 jedoch nicht dargestellt ist.

An dem Gehäuse sind zwei Ultraschallsonden 21, 22 befestigt, zwischen denen ein sich schräg zur Kanalachse 17 erstreckender Messpfad 25 ausgebildet ist. Das heißt die Abstrahlungsrichtungen 27 oder Signalrichtungen der Ultraschallsonden 21, 22 verlaufen nicht parallel und nicht rechtwinklig zur Kanalachse 17, sondern in einem schiefen Winkel 28. Für den Durchtritt der Ultraschallsignale durch die Wand 29 des Gehäuses 13 sind jeweilige Durchtrittslöcher 31 vorgesehen. Die Ultraschallsonden 21, 22 sind an eine nicht dargestellte elektronische Steuer- und Auswertungseinheit des Durchflussmesssystems 11 angeschlossen.

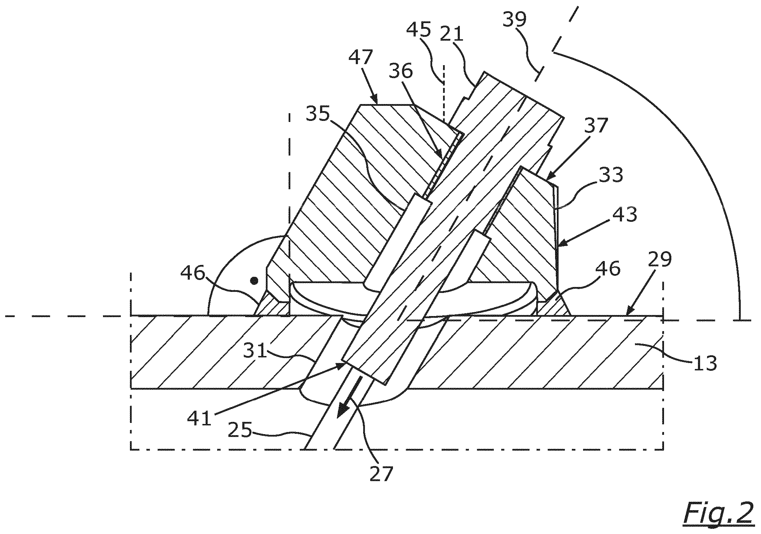

Die Ultraschallsonden 21, 22 sitzen in jeweiligen Befestigungsstutzen 33, die außen an der Wand 29 des Gehäuses 13 angeschweißt sind. Einer der beiden gleichartigen Befestigungsstutzen 33 mit zugehöriger Ultraschallsonde 21 ist in Fig. 2 vergrößert dargestellt. Die Ultraschallsonde 21 ist abschnittsweise zylindrisch und weist eine Längsachse 39 auf, die mit der Abstrahlungsrichtung 27 zusammenfällt. Die Signaltransmissionsfläche 41 der Ultraschallsonde 21 erstreckt sich rechtwinklig zu der Längsachse 39, das heißt die Ultraschallsonde 21 ist nicht gekröpft ausgeführt.

Eine zentrale, mit dem Durchtrittsloch 31 fluchtende Ausnehmung 35 des Befestigungsstutzens 33 bildet eine Aufnahme 36 für die Ultraschallsonde 21, wobei eine ebene und sich schräg zur Kanalachse 17 (Fig. 1) erstreckende Anlagefläche 37 für die Ultraschallsonde 21 dafür sorgt, dass die Längsachse 39 der Ultraschallsonde 21 schräg zur Kanalachse 17 verläuft, wenn die Ultraschallsonde 21 in der Aufnahme 36 sitzt.

Der Befestigungsstutzen 33 weist eine zylindrische Mantelfläche 43 auf, durch die eine Stutzenachse 45 des Befestigungsstutzens 33 definiert ist. Die zylindrische Mantelfläche 43 läuft um die Stutzenachse 45 um und reicht bis zur Wand 29 des Gehäuses 13. Die Stutzenachse 45 verläuft rechtwinklig zur Kanalachse 17, das heißt der Befestigungsstutzen 33 ist im rechten Winkel am Gehäuse 13 angeschweißt. Die betreffende Schweißnaht 46 am Übergang von der zylindrischen Mantelfläche 43 und der Wand 29 des Gehäuses 13 läuft vollständig um.

Da die zylindrische Mantelfläche 43 des Befestigungsstutzens 33 nicht schräg, sondern rechtwinklig an das Gehäuse 13 angrenzt, ist der Verzug der Schweißbaugruppe minimiert. Die Ausrichtung der Ultraschallsonde 21 ist selbst dann ausreichend genau, wenn das Schweißen automatisiert erfolgt und auf eine mechanische Nachbearbeitung verzichtet wird.

Der Befestigungsstutzen 33 weist an einem dem Gehäuse 13 abgewandten Ende eine ebene Spannwerkzeug-Angriffsfläche 47 auf, die sich rechtwinklig zu der Stutzenachse 45 und somit parallel zur Kanalachse 17 erstreckt, wenn der Befestigungsstutzen 33 am Gehäuse 13 angeschweißt ist. Somit kann der Befestigungsstutzen 33 während des Schweißvorgangs in günstiger Weise gegen das Gehäuse 13 gespannt werden.

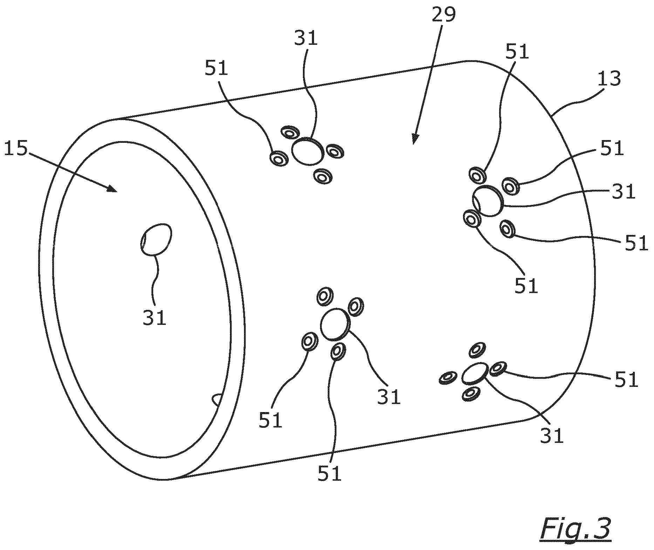

Nachfolgend wird unter Bezugnahme auf die Fig. 3-5 ein erfindungsgemäßes Verfahren zur Herstellung des in Fig. 1 dargestellten Durchflussmesssystems 11 beschrieben.

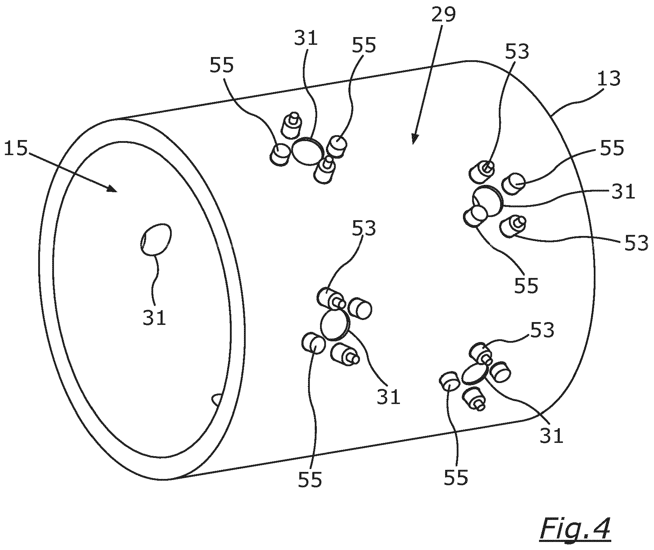

Zunächst wird ein rohrförmiges Gehäuse 13 bereitgestellt. In die Wand 29 des Gehäuses 13 werden wie in Fig. 3 gezeigt mehrere Durchtrittsöffnungen 31 für Ultraschallsignale sowie um die Durchtrittsöffnungen 31 verteilt angeordnete nichtdurchgehende Aufnahmebohrungen 51 eingebracht. In die Aufnahmebohrungen 51 werden Positionierstifte 53 und Abstandsbolzen 55 eingesetzt (Fig. 4), vorzugsweise klemmend. Wie dargestellt sind jeweils zwei Positionierstifte 53 und zwei Abstandsbolzen 55 bezüglich einer Durchtrittsöffnung 31 gegenüberliegend angeordnet.

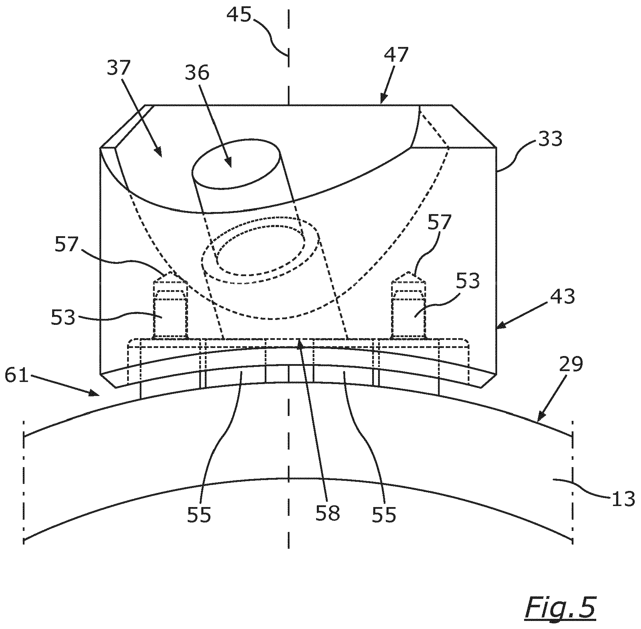

Dann wird für jede der Durchtrittsöffnungen 31 ein wie vorstehend beschrieben gestalteter Befestigungsstutzen 33 bereitgestellt und so ausgerichtet, dass sich die Stutzenachse 45 rechtwinklig zur Kanalachse 17 des Gehäuses 13 erstreckt. Jeder Befestigungsstutzen 33 wird so an das Gehäuse 13 herangeführt, dass die Positionierstifte 53 wie in Fig. 5 dargestellt in Stiftaufnahmen 57 des Befestigungsstutzens 33 gelangen. Das Heranführen des Befestigungsstutzens 33 an das Gehäuse 13 wird so lange weitergeführt, bis die Abstandsbolzen 55 an einer ebenen Stirnfläche 58 des Befestigungsstutzens 33 anstoßen und zwischen der Wand 29 des Gehäuses 13 und dem Befestigungsstutzen 33 ein gleichmäßiger Luftspalt 61 gebildet ist.

Mittels eines die Spannwerkzeug-Angriffsfläche 47 in einer bezüglich der Stutzenachse 45 axialen Richtung beaufschlagenden Spannwerkzeugs (nicht dargestellt) wird der Befestigungsstutzen 33 gegen das Gehäuse 13 gespannt und so fixiert. Das Spannwerkzeug muss keine Positionierungsfunktion erfüllen, da diese Funktion von den Positionierstiften 53 erfüllt wird. Dann wird der Befestigungsstutzen 33 mittels einer nicht gezeigten Schweißvorrichtung an der Wand 29 des Gehäuses 13 angeschweißt, wobei sich die Schweißnaht 46 (Fig. 2) bildet.

Dann werden die Ultraschallsonden 21, 22 in die Aufnahmen 36 der Befestigungsstutzen 33 eingesetzt. Im Ergebnis verläuft die Abstrahlungsrichtung 27 jeder Ultraschallsonde 21, 22 schräg zur Kanalachse 17. Diese schräge Ausrichtung der Ultraschallsignale kommt jedoch nicht durch eine schräge Ausrichtung des Befestigungsstutzens 33 relativ zum Gehäuse 13, sondern durch eine schräge Ausrichtung der Ultraschallsonde 21 relativ zum Befestigungsstutzen 33 zustande.

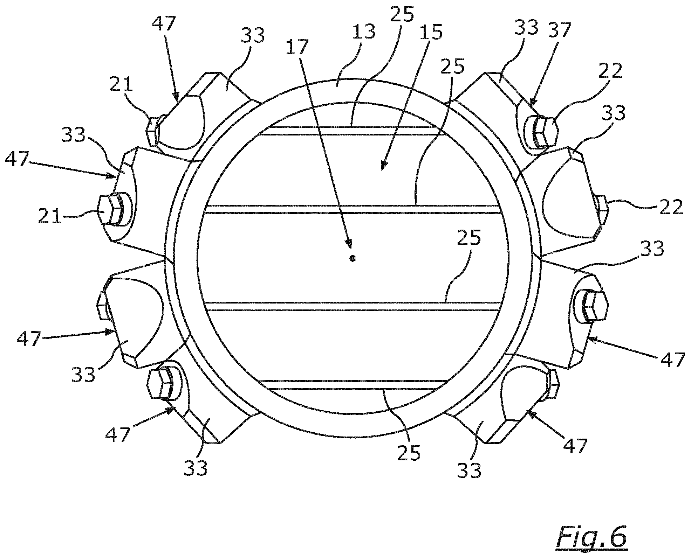

Das Fixieren der Befestigungsstutzen 33 am Gehäuse 13 ist insbesondere dadurch vereinfacht, dass es wie in Fig. 6 ersichtlich für jedes Paar von Befestigungsstutzen 33 parallel zueinander verlaufende und bezüglich der Kanalachse 17 gegenüberliegende Spannwerkzeug-Angriffsflächen 47 gibt, die gegensinnig beaufschlagt werden können.

Zur Positionierung der Befestigungsstutzen 33 könnten auch Anfräsungen am Gehäuse 13 vorgesehen sein. Außerdem könnten in einem einzelnen Befestigungsstutzen 33 zwei oder mehr Aufnahmen 36 mit Ultraschallsonden 21, 22 vorgesehen sein. Die Länge der Befestigungsstutzen 33 kann auf die Dicke der Wand 29 abgestimmt sein.

Ein erfindungsgemäßes Durchflussmesssystem 11 kann aufgrund der günstigen Schweißgeometrie ohne Schwierigkeiten hochdrucktauglich ausgeführt sein. Eine genaue Positionierung sämtlicher Ultraschallsonden 21, 22 ist selbst dann gewährleistet, wenn nach dem Schweißen keine mechanische Nachbearbeitung durchgeführt wird.

### Bezugszeichenliste

- 11: Durchflussmesssystem
- 13: Gehäuse
- 15: Fluidkanal
- 17: Kanalachse
- 21: Ultraschallsonde
- 22: Ultraschallsonde
- 25: Messpfad
- 27: Abstrahlungsrichtung
- 28: schiefer Winkel
- 29: Wand
- 31: Durchtrittsloch
- 33: Befestigungsstutzen
- 35: Ausnehmung
- 36: Aufnahme
- 37: Anlagefläche
- 39: Längsachse
- 41: Signaltransmissionsfläche
- 43: zylindrische Mantelfläche
- 45: Stutzenachse
- 46: Schweißnaht
- 47: Spannwerkzeug-Angriffsfläche
- 51: Aufnahmebohrung
- 53: Positionierstift
- 55: Abstandsbolzen
- 57: Stiftaufnahme
- 58: Stirnfläche
- 61: Luftspalt

## Patentansprüche

1. Durchflussmesssystem (11) zur Messung eines Fluiddurchflusses in einer Fluidleitung, insbesondere in einer Hochdruckleitung, umfassend:
ein Gehäuse (13), das einen Fluidkanal (15) aufweist und durch den Verlauf des Fluidkanals (15) eine Kanalachse (17) definiert,
wenigstens eine Ultraschallsonde (21, 22), die am Gehäuse (13) befestigbar ist und die eine Abstrahlungsrichtung (27) aufweist, wobei
zur Befestigung der Ultraschallsonde (21, 22) am Gehäuse (13) ein Befestigungsstutzen (33) vorgesehen ist, der an der Außenwand (29) des Gehäuses (13) angeschweißt ist und der eine Aufnahme (36) für die Ultraschallsonde (21, 22) aufweist, wobei die Abstrahlungsrichtung (27) der Ultraschallsonde (21, 22) schräg zur Kanalachse (17) verläuft, wenn die Ultraschallsonde (21, 22) in der Aufnahme (36) angeordnet ist,
wobei der Befestigungsstutzen (33) eine Mantelfläche (43) aufweist, die um eine rechtwinklig zur Kanalachse (17) verlaufende Stutzenachse (45) umläuft und sich ausgehend von einem gehäuseseitigen Endbereich des Befestigungsstutzens (33) in Richtung der Stutzenachse (45) erstreckt, wobei im Übergangsbereich zwischen der Mantelfläche (43) des Befestigungsstutzens (33) und der Außenwand (29) des Gehäuses (13) eine umlaufende Schweißnaht (46) gebildet ist,
**dadurch gekennzeichnet, dass**
von der Außenwand (29) des Gehäuses (31) wenigstens ein Abstandshalter (55) absteht, der an einer Begrenzungsfläche (58) des Befestigungsstutzens (33) anliegt.

2. Durchflussmesssystem nach Anspruch 1,
wobei die Mantelfläche (43) eine kreiszylindrische Form aufweist und eine Zylinderachse definiert, die parallel zur Stutzenachse (45) verläuft und vorzugsweise mit dieser zusammenfällt.

3. Durchflussmesssystem nach Anspruch 1 oder 2,
wobei der Befestigungsstutzen (33) wenigstens eine sich schräg zur Stutzenachse (45) erstreckende, insbesondere ebene, Anlagefläche (37) für die Ultraschallsonde (21, 22) aufweist.

4. Durchflussmesssystem nach einem der vorstehenden Ansprüche,
wobei der Befestigungsstutzen (33) eine ebene Spannwerkzeug-Angriffsfläche (47) aufweist, die sich rechtwinklig zu der Stutzenachse (45) erstreckt.

5. Durchflussmesssystem nach einem der vorstehenden Ansprüche,
wobei die Ultraschallsonde (21, 22) eine mit der Abstrahlungsrichtung (27) zusammenfallende Längsachse (39) und eine sich rechtwinklig zu der Längsachse (39) erstreckende Signaltransmissionsfläche (41) aufweist.

6. Durchflussmesssystem nach einem der vorstehenden Ansprüche,
wobei von der Außenwand (29) des Gehäuses (13) wenigstens ein Positionierstift (53) absteht, der in einer Stiftaufnahme (57) des Befestigungsstutzens (33) aufgenommen ist.

7. Durchflussmesssystem nach einem der vorstehenden Ansprüche,
wobei in dem Gehäuse (13) wenigstens ein mit der Aufnahme (36) fluchtendes Durchtrittsloch (31) für Ultraschallsignale der Ultraschallsonde (21, 22) ausgebildet ist.

8. Durchflussmesssystem nach einem der vorstehenden Ansprüche,
wobei das Durchflussmesssystem (11) wenigstens eine weitere am Gehäuse (13) befestigbare Ultraschallsonde (21, 22) aufweist, wobei zwischen den beiden am Gehäuse (13) befestigten Ultraschallsonden (21, 22) ein schräg zur Kanalachse (17) verlaufender Messpfad (25) ausgebildet ist.

9. Durchflussmesssystem nach einem der vorstehenden Ansprüche,
wobei das Gehäuse (13) zumindest abschnittsweise rohrförmig ist und vorzugsweise an beiden Enden mit Schraubflanschen versehen ist.

10. Verfahren zur Befestigung einer Ultraschallsonde (21, 22), die eine Abstrahlungsrichtung (27) aufweist, an einem Gehäuse (13), das einen Fluidkanal (15) aufweist und durch den Verlauf des Fluidkanals (15) eine Kanalachse (17) definiert, umfassend die Schritte:
Bereitstellen eines Befestigungsstutzens (33), der eine Aufnahme (36) für die Ultraschallsonde (21, 22) und eine Mantelfläche (43) aufweist, die um eine Stutzenachse (45) umläuft und sich ausgehend von einem Endbereich des Befestigungsstutzens (33) in Richtung der Stutzenachse (45) erstreckt, Positionieren des Befestigungsstutzens (33) relativ zum Gehäuse (13) derart, dass zwischen dem Endbereich und der Außenwand (29) des Gehäuses (13) ein Luftspalt (61) besteht und die Stutzenachse (45) rechtwinklig zur Kanalachse (17) verläuft,
Anschweißen des Befestigungsstutzens (33) an der Außenwand (29) des Gehäuses (13) unter Bildung einer umlaufenden Schweißnaht (46) im Bereich des Luftspalts (61), und
Einsetzen der Ultraschallsonde (21, 22) in die Aufnahme (36) des Befestigungsstutzens (33) derart, dass die Abstrahlungsrichtung (27) der Ultraschallsonde (21, 22) schräg zur Stutzenachse (45) verläuft,
**dadurch gekennzeichnet, dass**
der Befestigungsstutzen (33) beim Positionieren an das Gehäuse (13) herangeführt wird, bis wenigstens ein an der Außenwand (29) des Gehäuses (13) angeordneter Abstandshalter (55) an einer Stirnfläche (58) des Befestigungsstutzens (33) anstößt.

11. Verfahren nach Anspruch 10,
wobei der Abstandshalter (55) bolzenförmig ist und in eine Bolzenaufnahme (51) des Gehäuses (31) eingesetzt ist.

12. Verfahren nach einem der Ansprüche 10 oder 11,
wobei der Befestigungsstutzen (33) beim Positionieren so an das Gehäuse (13) herangeführt wird, dass wenigstens ein an der Außenwand (29) des Gehäuses (13) angeordneter Positionierstift (53) in eine Stiftaufnahme (57) des Befestigungsstutzens (33) gelangt, wobei der Positionierstift (53) bevorzugt in eine Stiftaufnahme (51) des Gehäuses (13) eingesetzt ist.

13. Verfahren nach einem der Ansprüche 10 bis 12,
wobei der Befestigungsstutzen (33) während des Anschweißens mittels eines Spannwerkzeugs gegen das Gehäuse (13) gespannt wird, insbesondere wobei das Spannwerkzeug mit einer Spannwerkzeug-Angriffsfläche (47) des Befestigungsstutzens (33) in Kontakt gebracht wird, die sich vorzugsweise rechtwinklig zu der Stutzenachse (45) erstreckt.

14. Verfahren nach einem der Ansprüche 10 bis 13,
wobei vor dem Positionieren des Befestigungsstutzens (33) wenigstens ein Durchtrittsloch (31) für Ultraschallsignale in dem Gehäuse (13) gebildet wird und der Befestigungsstutzen (33) so positioniert wird, dass das Durchtrittsloch (31) mit der Aufnahme (36) für die Ultraschallsonde (21, 22) fluchtet.

## Claims

1. A throughflow measurement system (11) for measuring a fluid throughflow in a fluid line, in particular in a high pressure line, said throughflow measurement system (11) comprising:
a housing (13) which has a fluid channel (15) and which defines a channel axis (17) by means of the course of the fluid channel (15),
at least one ultrasonic probe (21, 22) which can be fastened to the housing (13) and which has a radiation direction (27), wherein,
for fastening the ultrasonic probe (21, 22) to the housing (13), a fastening stub (33) is provided that is welded to the outer wall (29) of the housing (13) and that has a receiver (36) for the ultrasonic probe (21, 22), wherein the radiation direction (27) of the ultrasonic probe (21, 22) extends obliquely to the channel axis (17) when the ultrasonic probe (21, 22) is arranged in the receiver (36),
wherein the fastening stub (33) has a lateral surface (43) which revolves around a stub axis (45) extending at a right angle to the channel axis (17) and which extends, starting from a housing-side end region of the fastening stub (33), in the direction of the stub axis (45), wherein a peripheral weld seam (46) is formed in the transition region between the lateral surface (43) of the fastening stub (33) and the outer wall (29) of the housing (13),
**characterized in that**
at least one spacer (55) projects from the outer wall (29) of the housing (31) and contacts a boundary surface (58) of the fastening stub (33).

2. A throughflow measurement system according to claim 1,
wherein the lateral surface (43) has a circular cylindrical shape and defines a cylinder axis which extends in parallel with the stub axis (45) and preferably coincides therewith.

3. A throughflow measurement system according to claim 1 or 2,
wherein the fastening stub (33) has at least one contact surface (37), in particular a planar contact surface (37), for the ultrasonic probe (21, 22), said contact surface extending obliquely to the stub axis (45).

4. A throughflow measurement system according to any one of the preceding claims,
wherein the fastening stub (33) has a planar clamping tool engagement surface (47) which extends at a right angle to the stub axis (45).

5. A throughflow measurement system according to any one of the preceding claims,
wherein the ultrasonic probe (21, 22) has a longitudinal axis (39) coinciding with the radiation direction (27) and a signal transmission surface (41) extending at a right angle to the longitudinal axis (39).

6. A throughflow measurement system according to any one of the preceding claims,
wherein at least one positioning pin (53) projects from the outer wall (29) of the housing (13) and is received in a pin receiver (57) of the fastening stub (33).

7. A throughflow measurement system according to any one of the preceding claims,
wherein at least one passage hole (31), which is in alignment with the receiver (36), for ultrasonic signals of the ultrasonic probe (21, 22) is formed in the housing (13).

8. A throughflow measurement system according to any one of the preceding claims,
wherein the throughflow measurement system (11) has at least one further ultrasonic probe (21, 22) which can be fastened to the housing (13), wherein a measurement path (25) extending obliquely to the channel axis (17) is formed between the two ultrasonic probes (21, 22) fastened to the housing (13).

9. A throughflow measurement system according to any one of the preceding claims,
wherein the housing (13) is at least sectionally tubular and is preferably provided with screw flanges at both ends.

10. A method for fastening an ultrasonic probe (21, 22), which has a radiation direction (27), to a housing (13) which has a fluid channel (15) and which defines a channel axis (17) by means of the course of the fluid channel (15), comprising the steps:
providing a fastening stub (33) which has a receiver (36) for the ultrasonic probe (21, 22) and a lateral surface (43) which revolves around a stub axis (45) and which extends, starting from an end region of the fastening stub (33), in the direction of the stub axis (45),
positioning the fastening stub (33) relative to the housing (13) such that there is an air gap (61) between the end region and the outer wall (29) of the housing (13) and the stub axis (45) extends at a right angle to the channel axis (17),
welding the fastening stub (33) to the outer wall (29) of the housing (13) while forming a peripheral weld seam (46) in the region of the air gap (61), and
inserting the ultrasonic probe (21, 22) into the receiver (36) of the fastening stub (33) such that the radiation direction (27) of the ultrasonic probe (21, 22) extends obliquely to the stub axis (45),
**characterized in that**
the fastening stub (33) is moved towards the housing (13) during the positioning until at least one spacer (55) arranged at the outer wall (29) of the housing (13) abuts an end face (58) of the fastening stub (33).

11. A method according to claim 10,
wherein the spacer (55) is bolt-shaped and is inserted into a bolt receiver (51) of the housing (31).

12. A method according to one of the claims 10 or 11,
wherein the fastening stub (33) is moved towards the housing (13) during the positioning such that at least one positioning pin (53) arranged at the outer wall (29) of the housing (13) enters into a pin receiver (57) of the fastening stub (33), wherein the positioning pin (53) is preferably inserted into a pin receiver (51) of the housing (13).

13. A method according to any one of the claims 10 to 12,
wherein the fastening stub (33) is clamped against the housing (13) by means of a clamping tool during the welding, in particular wherein the clamping tool is brought into contact with a clamping tool engagement surface (47) of the fastening stub (33), said clamping tool engagement surface (47) preferably extending at a right angle to the stub axis (45).

14. A method according to any one of the claims 10 to 13,
wherein at least one passage hole (31) for ultrasonic signals is formed in the housing (13) before the positioning of the fastening stub (33) and the fastening stub (33) is positioned such that the passage hole (31) is aligned with the receiver (36) for the ultrasonic probe (21, 22).

## Revendications

1. Système de mesure de débit (11) destiné à mesurer le débit d'un fluide dans une conduite de fluide, en particulier dans une conduite à haute pression, comprenant :
un boîtier (13) qui comporte un canal de fluide (15) et qui définit un axe de canal (17) par le tracé du canal de fluide (15),
au moins une sonde à ultrasons (21, 22) qui peut être fixée au boîtier (13) et qui présente une direction d'émission (27),
dans lequel
pour la fixation de la sonde à ultrasons (21, 22) au boîtier (13), il est prévu un manchon de fixation (33) qui est soudé à la paroi extérieure (29) du boîtier (13) et qui présente un logement (36) pour la sonde à ultrasons (21, 22), la direction d'émission (27) de la sonde à ultrasons (21, 22) s'étendant en oblique par rapport à l'axe de canal (17) lorsque la sonde à ultrasons (21, 22) est disposée dans le logement (36),
le manchon de fixation (33) présente une surface enveloppante (43) qui s'étend autour d'un axe de manchon (45) disposé à angle droit par rapport à l'axe de canal (17) et qui s'étend à partir d'une zone d'extrémité du manchon de fixation (33), située du côté du boîtier, en direction de l'axe de manchon (45), un cordon de soudure périphérique (46) étant formé dans la zone de transition entre la surface enveloppante (43) du manchon de fixation (33) et la paroi extérieure (29) du boîtier (13),
**caractérisé en ce que**
au moins un élément écarteur (55) fait saillie de la paroi extérieure (29) du boîtier, lequel s'appuie contre une surface de délimitation (58) du manchon de fixation (33).

2. Système de mesure de débit selon la revendication 1,
dans lequel la surface enveloppante (43) est en forme de cylindre circulaire et définit un axe de cylindre qui s'étend parallèlement à l'axe de manchon (45) et coïncide de préférence avec celui-ci.

3. Système de mesure de débit selon la revendication 1 ou 2,
dans lequel le manchon de fixation (33) présente au moins une surface d'appui (37), notamment plane, pour la sonde à ultrasons (21, 22), laquelle s'étend en oblique par rapport à l'axe de manchon (45).

4. Système de mesure de débit selon l'une des revendications précédentes, dans lequel le manchon de fixation (33) présente une surface plane (47) pour appliquer un outil de serrage, laquelle s'étend à angle droit par rapport à l'axe de manchon (45).

5. Système de mesure de débit selon l'une des revendications précédentes, dans lequel la sonde à ultrasons (21, 22) présente un axe longitudinal (39) coïncidant avec la direction d'émission (27) et une surface de transmission de signal (41) s'étendant à angle droit par rapport à l'axe longitudinal (39).

6. Système de mesure de débit selon l'une des revendications précédentes, dans lequel au moins une tige de positionnement (53) fait saillie de la paroi extérieure (29) du boîtier (13), laquelle est logée dans un logement de tige (57) du manchon de fixation (33).

7. Système de mesure de débit selon l'une des revendications précédentes, dans lequel au moins un trou de passage (31) pour les signaux ultrasonores de la sonde à ultrasons (21, 22) est ménagé dans le boîtier (13) et est aligné avec le logement (36).

8. Système de mesure de débit selon l'une des revendications précédentes, dans lequel le système de mesure de débit (11) comporte au moins une autre sonde à ultrasons (21, 22) pouvant être fixée au boîtier (13), et un trajet de mesure (25) s'étendant en oblique par rapport à l'axe de canal (17) est formé entre les deux sondes à ultrasons (21, 22) fixées au boîtier (13).

9. Système de mesure de débit selon l'une des revendications précédentes, dans lequel le boîtier (13) est au moins localement tubulaire et est de préférence muni de brides vissées aux deux extrémités.

10. Procédé de fixation d'une sonde à ultrasons (21, 22), présentant une direction d'émission (27), à un boîtier (13) qui comporte un canal de fluide (15) et qui définit un axe de canal (17) par le tracé du canal de fluide (15), comprenant les étapes consistant à :
fournir un manchon de fixation (33) qui présente un logement (36) pour la sonde à ultrasons (21, 22) et une surface enveloppante (43) qui s'étend autour d'un axe de manchon (45) et s'étend à partir d'une zone d'extrémité du manchon de fixation (33) en direction de l'axe de manchon (45),
positionner le manchon de fixation (33) par rapport au boîtier (13) de telle sorte qu'il existe un entrefer (61) entre la zone d'extrémité et la paroi extérieure (29) du boîtier (13) et que l'axe de manchon (45) s'étende à angle droit par rapport à l'axe de canal (17),
souder le manchon de fixation (33) sur la paroi extérieure (29) du boîtier (13) en formant un cordon de soudure périphérique (46) au niveau de l'entrefer (61), et
insérer la sonde à ultrasons (21, 22) dans le logement (36) du manchon de fixation (33) de telle sorte que la direction d'émission (27) de la sonde à ultrasons (21, 22) s'étende en oblique par rapport à l'axe de manchon (45), **caractérisé en ce que**
lors du positionnement, le manchon de fixation (33) est rapproché du boîtier (13) jusqu'à ce qu'au moins un élément écarteur (55) disposé sur la paroi extérieure (29) du boîtier (13) vienne buter contre une face frontale (58) du manchon de fixation (33).

11. Procédé selon la revendication 10,
dans lequel l'élément écarteur (55) est en forme de goujon et est inséré dans un logement de goujon (51) du boîtier (31).

12. Procédé selon l'une des revendications 10 ou 11,
dans lequel, lors du positionnement, le manchon de fixation (33) est rapproché du boîtier (13) de telle sorte qu'au moins une tige de positionnement (53) disposée sur la paroi extérieure (29) du boîtier (13) s'engage dans un logement de tige (57) du manchon de fixation (33), la tige de positionnement (53) étant de préférence insérée dans un logement de tige (51) du boîtier (13).

13. Procédé selon l'une des revendications 10 à 12,
dans lequel, pendant le soudage, le manchon de fixation (33) est serré contre le boîtier (13) au moyen d'un outil de serrage,
en particulier, l'outil de serrage est mis en contact avec une surface (47) du manchon de fixation (33) prévue pour appliquer l'outil de serrage et s'étendant de préférence à angle droit par rapport à l'axe de manchon (45).

14. Procédé selon l'une des revendications 10 à 13,
dans lequel, avant le positionnement du manchon de fixation (33), au moins un trou de passage (31) pour les signaux ultrasonores est ménagé dans le boîtier (13), et le manchon de fixation (33) est positionné de telle sorte que le trou de passage (31) soit aligné avec le logement (36) pour la sonde à ultrasons (21, 22).
